# EUROPÄISCHE PATENTANMELDUNG

(11) **EP 1 289 200 A1**
(43) Veröffentlichungstag der Anmeldung: **05.03.2003**
(21) Anmeldenummer: 01121191.9
(22) Anmeldetag: 04.09.2001
(51) Int. Cl.: H04L 12/56, H04L 12/28

(54) **Verfahren zum Identifizieren einer Station mit besonderer Funktionalität in einem funkgestützten Ad-hoc-Netz und Netzstation zum Durchführen eines solchen Verfahrens**

(71) Anmelder: SIEMENS AKTIENGESELLSCHAFT, 80333 München (DE)
(72) Erfinder: Mitjana, Enric, 81369 München (DE)

(57) **Zusammenfassung**

Die Erfindung bezieht sich auf ein Verfahren zum Identifizieren von Netzstationen (S1) mit besonderer Funktionalität (F) in einem Ad-hoc-Netz mit zumindest zwei Netzstationen (S1 - S3), von denen zumindest eine Netzstation (S1) die besondere Funktionalität (F) anderen der Netzstationen (S2, S3) anbietet, wobei die Fähigkeit zum Ausführen einer besonderen Funktionalität (F) den anderen Netzstationen (S2) und/oder eine entsprechende Weitervermittlungsmöglichkeit den anderen Netzstationen (S3) mittels einer Signalisierung (a) mitgeteilt wird. Als besondere Funktionalität kann insbesondere ein Zugang zu einem anderen Kommunikationssystem, z.B. dem UMTS-Netz angeboten werden.

## Beschreibung

Die Erfindung bezieht sich auf ein Verfahren zum Identifizieren einer Station mit besonderer Funktionalität in einem Ad-hoc-Netz mit den oberbegrifflichen Merkmalen des Patentanspruchs 1 sowie eine Netzstation zum Durchführen eines solchen Verfahrens.

Bei derzeit in der Entwicklung befindlichen Ad-hoc-Netzen ist eine Vielzahl von Netzstationen in der Lage, eigenständig ohne eine vermittelnde zentrale Netzeinrichtung eine Funkverbindung zu anderen derartigen Netzstationen aufzubauen. Dabei soll der Aufbau einer Funkverbindung zwischen jeweils zwei derartigen Netzstationen automatisch erfolgen. Ad-hoc-Netze für kleine lokale Bereiche, z. B. Bürogebäude, sollen in der Lage sein, eine Kommunikation zwischen einer geringen Anzahl von derartigen Netzstationen zu ermöglichen, während gemäß anderer Konzeptionen auch Ad-hoc-Netze in Entwicklung sind, bei denen eine große Vielzahl von Netzstationen über einen großen Raum verteilt miteinander kommunizieren können soll. Bei einem drahtlosen bzw. funkgestützten Ad-hoc-Netz handelt es sich beispielsweise um eine Art eines selbstorganisierenden lokalen Funknetzes (WLAN: Wireless Local Aerea Network). Ein besonderer Vorteil liegt in der großen Mobilität, durch die sich die Topologie des Netzes beliebig ändern kann. Dies bedingt jedoch auch, dass zu bestimmten Zeitpunkten an bestimmten Orten eine besonders gute Verbindung zu einer Vielzahl anderer Netzstationen bestehen kann, während am gleichen Ort zu anderen Zeitpunkten unter Umständen überhaupt keine Verbindung zu einer anderen Netzstation möglich ist. Ähnlich verhält es sich mit der Qualität von Funkverbindungen zwischen einzelnen Netzstationen, so dass auch Datenraten, zeitliche Verzögerungen (Delay), Dienstegüte (QoS: Quality of Service) usw. von Zeit zu Zeit und von Ort zu Ort stark schwanken können.

Für Netzstationen derartiger Ad-hoc-Netze bestehen Überlegungen, Sonderfunktionen oder Sonderdienste verfügbar zu machen. Beispielsweise ist in "Towards Mobile Ad-Hoc-WANs: Terminodes", IEEE WCNC'2000 Conference, Chicago, September 2000" angesprochen, eine derartige Netzstation individuell mit Internetfähigkeit auszustatten, wobei dies zum Vorteil für die Gesamtheit der Netzstationen im Bereich dieser Station gereichen soll. Vorausgesetzt wird dabei, dass eine solche denkbare Erweiterung jedoch nicht zum Betrieb des Netzes zwingend erforderlich sein soll.

Ein derartiges Einbinden einer Internet-Funktionalität oder einer sonstigen Funktionalität in eine Station, wobei die Funktionalität auch für andere Netzstationen verfügbar sein soll, ist nicht in naheliegender Art und Weise umsetzbar. Einerseits fehlt anderen Netzstationen ohne eine derartige Funktionalität überhaupt die Kenntnis der Möglichkeit der entsprechenden Funktionalitätsnutzung. Weiterhin muss ein Netzpfad bzw. eine Route zwischen den eine solche Funktionalität benötigenden und den eine solche Funktionalität anbietenden Netzstationen aufgebaut werden, wobei die Route unter Umständen über eine Vielzahl dazwischen befindlicher Netzstationen führt, wobei derartige Übermittlungen über mehrere Stationen auch als "Hopping" bzw. "Hops" bezeichnet werden.

Ein Vergleich mit andersartigen Kommunikationssystemen zeigt, dass eine direkte Übertragung von Technologien in den Bereich der Ad-hoc-Netztechnik nicht nahe liegt. Beim Internet wird beispielsweise eine Adresse eines Gateways, welches eine bestimmte Funktionalität oder einen Internetzugang anbietet, fest in den darauf zugreifenden Terminals eingetragen, wobei einem Terminal vorliegend eine Ad-hoc-Netzstation entsprechen würde. Findet das Terminal die gesuchte IP-Adresse (IP: Internet Protocol) im lokalen Netz nicht, schickt es die Pakete an ein anderes Gateway weiter. Die dabei eingerichteten Routen bleiben über große Zeiträume fest bestehen, wobei auch die definierenden Fähigkeiten hinsichtlich Datendurchsatz, Dienstegüte usw. über die Zeit fast statisch bleiben. Eine Übertragung auf Ad-hoc-Netzstationen liegt jedoch fern, da der Vorteil von Ad-hoc-Netzen gerade darin besteht, dass die einzelnen Netzstationen sich beliebig untereinander verbinden können, ohne auf fest definierte Netzstrukturen und Netzadressen zurückgreifen zu müssen.

Einfache Ad-hoc-Kommunikationssysteme, wie beispielsweise das unter der Bezeichnung "Bluetooth" bekannte Kommunikationssystem, dienen als Ersatz für Kabelverbindungen, beispielsweise als Zugänge zu lokalen Netzen mittels eines Notebooks und dergleichen. Bluetooth soll dabei einige Fähigkeiten mit Blick auf Internetzugänge unterstützen. Beim gegenseitigen "Entdecken" zweier derartiger Stationen werden Informationen über die möglichen Dienste zwischen den Terminals ausgetauscht. Dabei handelt es sich um Dienste, die sich über die Zeit nicht nennenswert ändern, beispielsweise Druckfunktionen oder Kopierfunktionen, um Daten von einem Notebook in einen Zentralspeicher eines Netzes zu kopieren. Funktionen zum Aufbau einer Route über mehrere Stationen liegen bei Bluetooth jedoch fern, da es sich um direkte Punkt-zu-Punkt-Verbindungen handelt.

Erste Entwicklungen von Ad-hoc-Netzen stammen aus dem militärischen Bereich, um Daten auf beispielsweise einem Schlachtfeld zwischen entsprechend verteilten Netzstationen auszutauschen. Dabei wird das Routing anhand GPS-bestimmter (GPS: Global Positioning System) geographischer Positionen der einzelnen Netzstationen bestimmt und optimiert. Diese Vorgehensweise ist in Innenraumumgebungen jedoch nicht immer möglich oder bei kleinen Netzen nicht genau genug, z.B. bei 5 Terminals in einem 50qm Raum mit GPS-Genauigkeiten um die 100m, da sich keine derart genaue Positionierung ermitteln lässt.

Hinsichtlich des Bestimmens von Routen zwischen zwei Netzstationen sind Beispiele aus "Towards Mobile Ad-hoc-WANs: Terminodes", IEEE WCNC'2000 Conference, Chicago, September 2000" bekannt. Unterschieden wird dabei zwischen einer lokalen Sicht und einer entfernten Sicht einer Netzstation. Bei der lokalen Betrachtungsweise versucht eine Netzstation sich ein räumliches Bild der Verteilung verschiedener Netzstationen im näheren Umfeld zu machen. Dazu werden eindeutige Endsystem-Identifizierungsnummern (EUI: End-System Unique Identifier) der Netzstationen in dem Bereich der sogenannten Nachbarschaft ermittelt, wobei unter Netzstationen in der Nachbarschaft bzw. Nachbarn Netzstationen zu verstehen sind, die mit einigen wenigen Sprüngen bzw. Hops zu erreichen sind. Weiterhin ist der Pfad bzw. die Route zu solchen Nachbarn sowie deren Lage zu ermitteln und abzuspeichern. Bei Bedarf versuchen die Netzstationen eine Fernsicht durch das Ermitteln von Informationen von nicht benachbarten Netzstationen aufzubauen. Die Fernsicht ist dabei z. B. auf Basis von verankerten geodätischen Punkten aufgebaut, wobei zu entfernten Netzstationen bei Kenntnis von deren Richtung, der kürzeste geodätische Weg gesucht und berechnet wird. Befinden sich auf diesem geodätisch kürzesten Weg keine Netzstationen mit der Möglichkeit, die Daten oder Informationen weiter zu vermitteln, wird ein Weg innerhalb eines möglichst geringen Winkels in der Zielrichtung gesucht, in dem sich Netzstationen mit Weitervermittlungsmöglichkeit befinden. Bei dem Vermitteln einer Route auf diese Art und Weise wird ein Routenvektor aus einer Liste von Ankerpunkten und/oder Netzstations-Identifizierungsnummern aufgebaut, wobei diese Liste für das spätere Versenden von Nutzdaten als Kopfabschnittsinformation (Header Information) zum Leiten der Daten mitgesendet wird.

Mit Blick auf den Stand der Technik kann somit zwischen zwei Arten von Routingprotokollen, sogenannten proactiven und reactiven Protokollen unterschieden werden. Bei proactiven Protokollen wird versucht, eine Route zu entdecken, wobei die entdeckten Routen ständig auf deren Beständigkeit überprüft werden und zwar unabhängig davon, ob die Routen benutzt werden oder nicht. Beispiele dazu sind in bestehenden andersartigen Kommunikationssystemen der traditionell bekannte Verbindungsstatus (Link Status) und Abstandsvektor-Protokolle (Distance Vector Protocols). Die reactiven Protokolle bauen hingegen nur dann eine Route auf, wenn dafür Bedarf besteht. Beispiele dazu sind das dynamische Routenbilden von der Quell-Netzstation aus (DSR: Dynamic Source Routing) und das Abstandsvektorrouten auf Anforderung (AODV: Ad-hoc On demand Distance Vector Routing). Letzteres hat den Vorteil einer geringeren Signalisierungslast. Nachteilhaft ist bei beispielsweise dem DSR, dass im Fall einer angeforderten Verbindungsinitiierung die anfordernde Quell-Netzstation zuerst eine Routensuche durchführen muss. Dieser Aufbau nimmt dabei nur eine geringe Zeit in Anspruch. Nach dem Auffinden einer Route werden alle Nutzpakete über die vordefinierte Route gesendet, wobei die einzelnen Datenpakete anhand der Kopfabschnittsinformationen gezwungen werden, die auf dieser Route ermittelten Netzstationen zu benutzen. Eine Änderung in der Verbindungsschicht (Link layer), beispielsweise durch die Mobilität der Netzstationen, kann dazu führen, dass eine der Netzstationen sich nicht mehr in der geeigneten Lage befindet, die zum Zeitpunkt des Verbindungsaufbaus vorlag. Unterbrechungen in der Route müssen zuerst zu der Quell-Netzstation zurückübermittelt werden, damit diese für die Übertragung weiterer Datenpakete eine neue Route ermittelt.

Die Aufgabe der Erfindung besteht darin, ein Verfahren zum Identifizieren einer Netzstation mit besonderer Funktionalität sowie ein verbessertes Routingverfahren zum Aufbauen und Unterhalten von Routen vorzuschlagen.

Diese Aufgabe wird durch ein Verfahren zum Identifizieren von Netzstationen mit besonderer Funktionalität gemäß den Merkmalen des Patentanspruchs 1 bzw. eine Netzstation mit besonderer Funktionalität gemäß den Merkmalen des Patentanspruchs 6 gelöst.

Vorteilhafte Ausgestaltungen sind Gegenstand von abhängigen Ansprüchen.

Das Aussenden von Mitteilungen bzw. Informationen über die besondere Funktionalität einer Netzstation versorgt umliegende Netzstationen vorteilhafterweise mit den erforderlichen Daten, um einerseits zu erkennen, dass eine bestimmte Funktionalität einer fremden Netzstation nutzbar ist und andererseits, um welche Netzstation und/oder Dienste es sich dabei handelt.

In zweckmäßiger Weise wird bei einer Übertragung der Funktionalitätsinformation über zwischengeschaltete weitere Netzstationen jeweils zusätzlich von den zwischengeschalteten Netzstationen ein Zählwert hochgezählt, so dass die empfangende Netzstation anhand des Zählwertes erkennen kann, wie viele Sprünge bzw. Hops die Netzstation entfernt ist, welche den besonderen Dienst oder die besondere Funktionalität anbietet. Dies ermöglicht einerseits bei mehreren möglichen Routen die Auswahl einer Route mit möglichst wenigen Sprüngen und ermöglicht andererseits auch eine Abschätzung über die Sicherheit der Verbindung über einen längeren Zeitraum sowie die Qualität der Verbindung.

Der Einsatz einer solchen Verfahrensweise mit einer Signalisierung von verfügbaren Sonderdiensten über die Netzstation, welche die Sonderfunktionalität bzw. die Sonderdienste anbietet, oder weitere Netzstationen, welche eine Verbindungsvermittlung zwischen einer solchen Netzstation und einer den Sonderdienst oder die Sonderfunktionalität anfordernden Station ermöglichen, ist insbesondere in kleinen lokalen Netzen mit einer geringen Teilnehmeranzahl bzw. Anzahl von Ad-hoc-Netzstationen vorteilhaft, da in derartigen kleinen Netzen die Netzbelastung durch die Signalisierung mit Blick auf die Gesamtleistung des Netzes nicht kritisch ist.

Die Weiterleitung von Informationen, die in einer Netzstation vorliegen, an eine direkt benachbarte Netzstation, die diese Daten bzw. Informationen wiederum aufnimmt und als eigene Daten gegenüber weiteren zu dieser direkt benachbarten Netzstationen weitergibt, ermöglicht ein effektives Routing, welches vorteilhafte Aspekte sowohl einer herkömmlichen kurzsichtigen als auch einer herkömmlichen weitsichtigen Routingmethode aufweist. Durch einen periodischen Austausch von Informationen mit Nachbar-Netzstationen weiß jede der Netzstationen, welche Funktionalität die direkt benachbarte Netzstation selber aufweist oder vermitteln kann. In den einzelnen Netzstationen muss somit lediglich die Information von angebotenen Funktionen und Diensten von sich selber und direkt benachbarten Netzstationen abgespeichert werden, wobei bei der Weitervermittlung oder dem weiteren Anbieten derartiger Funktionen und Dienste an dritte direkt benachbarte Netzstationen zweckmäßigerweise Identifizierungsinformationen einerseits mit den Routingdaten übertragen und andererseits in der entsprechenden Netzstation abgespeichert werden. Dies ermöglicht ein Routing ohne einerseits eine regionale Kenntnis der weiteren Nachbarschaft und andererseits ein Routing nach dem herkömmlichen Routingverfahren für weit entfernte Netzstationen mit jeweils starren Routen und aufwendigen Kopfabschnittinformationen mit den gesamten erforderlichen Daten der Route. Jede Netzstation routet bzw. leitet eigene oder hereinkommende Datenpakete entsprechend ihrer eigenen aktuellsten Kenntnisse weiter. Die Quell-Netzstation muss keine detaillierte Route in jeden einzelnen Paket-Kopfabschnitt eintragen, was wiederum zu einer geringeren Systembelastung führt. Insbesondere wird das Verhältnis von Informationslast zu Nutzlast in den Datenpaketen deutlich verbessert. Unter direkt benachbarter Netzstation wird vorstehend eine Netzstation verstanden, die mit einer direkten Verbindung ohne Sprünge erreichbar ist.

Ein Ausführungsbeispiel wird nachfolgend anhand der Zeichnung näher erläutert. Es zeigen:
- Fig. 1: eine Anordnung von Ad-hoc-Netzstationen, wobei eine dieser Stationen mit einer Sonderfunktionalität ausgestattet ist und
- Fig. 2: schematisch Signalisierungsinformationen.

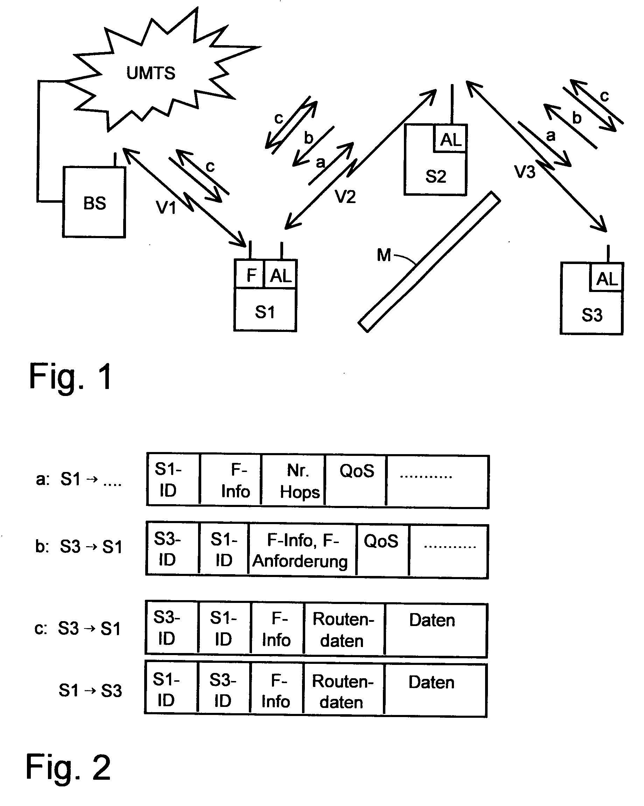

Wie aus Fig. 1 ersichtlich, besteht ein Ad-hoc-Netz aus zwei oder mehr Netzstationen S1 - S3, die untereinander Funkverbindungen V2, V3 aufbauen können. Zusätzliche Netzeinrichtungen zum Verwalten des Ad-hoc-Netzes sind in vorteilhafter Weise nicht erforderlich. Die gesamte Netzverwaltung für eine einzelne dieser Netzstationen S1 - S3 findet jeweils in den einzelnen Netzstationen S1 - S3 selber statt. In zweckmäßiger Weise weisen die Netzstationen S1 - S3 dafür entsprechende Sende- und Empfangseinrichtungen mit Steuer- und Speichereinrichtungen auf, wobei diese Einrichtungen als Ad-hoc-Netzmodul AL skizziert sind.

Beim dargestellten Ausführungsbeispiel ist eine Funkverbindung V2 zwischen der ersten Netzstation S1 und der zweiten Netzstation S2 aufgebaut. Eine weitere Funkverbindung V3 ist zwischen der zweiten Netzstation S2 und der dritten Netzstation S3 aufgebaut. Die zweite Netzstation S2 kann über die Funkverbindungen V2, V3 eigenständig mit den beiden direkt benachbarten Netzstationen S1 bzw. S3 kommunizieren, kann aber bei entsprechender Freigabe durch den Benutzer der zweiten Netzstation S2 auch als Relaisstation wirken, um eine Funkverbindung V2 + V3 von der ersten Netzstation S1 zur dritten Netzstation S3 für deren Kommunikation untereinander aufzubauen. Eine direkte Kommunikation über eine direkte Funkschnittstelle zwischen der ersten Netzstation S1 und der dritten Netzstation S3 soll beim vorliegenden Ausführungsbeispiel aufgrund einer zu großen Entfernung zwischen diesen oder aufgrund eines Funkhindernisses M zwischen diesen nicht möglich sein.

Wie dargestellt, soll die erste Netzstation S1 mit einer besonderen Funktionalität in einem Funktionsmodul F ausgestattet sein. Beispielhaft soll die Funktionalität darin bestehen, dass die erste Netzstation S1 über das Funktionsmodul F eine Funkverbindung V1 mit einem UMTS-Netz (UMTS: Universal Mobile Telecommunications System) aufbauen kann. Die entsprechende Gegenstelle wäre beispielsweise eine Basisstation BS des UMTS-Netzes. Möglich ist aber z.B. auch die Bereitstellung einer Datenbank als besondere Funktionalität.

Durch das Anbieten der besonderen Funktionalität kann nicht nur die erste Netzstation S1 auf das UMTS-Netz zugreifen, sondern der Benutzer der ersten Netzstation S1 kann dies auch den weiteren Netzstationen S2, S3 ermöglichen, wobei die erste Netzstation S1 dann als Relaisstation bzw. Gateway betrieben wird. In zweckmäßiger Weise kann die Gateway-Funktion der ersten Netzstation S1 durch deren Benutzer optional auch deaktiviert werden, beispielsweise um die Leistung der Batterie der Netzstation nicht zu schnell zu verbrauchen.

In vorteilhafter Weise wird die Fähigkeit der Sonderfunktionalität der ersten Netzstation S1 den weiteren Netzstationen S2, S3, die über eine solche Funktionalität nicht verfügen, mitgeteilt. Dies kann beispielsweise über einen Nachrichten- bzw. Broadcast- oder einen Punkt-zu-Punkt-Kanal erfolgen, über den eine Kommunikation mit den Nachbarstationen S2 stattfindet. In vorteilhafter Weise kann für diese Funktionalitätssignalisierung auf Kanäle zugegriffen werden, die z.B. für den Aufbau von Routing-Tabellen der Netzstationen S2, S3 vorgesehen sind oder als gemeinsam verwendeter Kanal (shared channel) einen mehr oder weniger ordentlichen Zugriff auf die Luftschnittstelle ermöglichen, um jederzeit Änderungen der Netztopologie berücksichtigen zu können und die einzelnen Netzstationen S1 - S3 stets mit aktuellen Routing-Informationen zu versorgen. In vorteilhafter Weise wird die Information über die besondere Funktionalität der ersten Netzstation S1 regelmäßig wiederholt ausgesendet und nach Bedarf aktualisiert. Insbesondere kann auch eine Zusatzinformation über die Qualität der Funkschnittstelle V1 zwischen der ersten Netzstation S1 und der Basisstation BS des UMTS-Netzes bzw. allgemein die Qualität der besonderen Funktionalität zusammen mit der Information über die Fähigkeit zur Durchführung der besonderen Funktionalität an die weiteren Netzstationen S2, S3 übermittelt werden.

In Fig. 1 ist das Signalisieren der Funktionalitätsfähigkeit durch einen Pfeil a zwischen der ersten Netzstation S1 und der zweiten Netzstation S2 dargestellt. Sofern die zweite Netzstation S2 in der Lage ist, für diese besondere Funktionalität auch als Relaisstation zu dienen und vom Benutzer dafür auch freigegeben ist, kann die zweite Netzstation S2 eine entsprechende Funktionalitätsinformation an weitere Netzstationen, hier die dritte Netzstation S3 weiterleiten (Pfeil a).

Fig. 2 stellt beispielhafte Informationsdaten für die verschiedenen Signalisierungen und Datenblöcke dar. Der erste Signalisierungsblock beschreibt eine Signalisierung der besonderen Funktionalität an andere Netzstationen, wie dies in Fig. 1 durch den Pfeil a dargestellt ist. Neben der Angabe einer Stations-Identifizierungsnummer S1-ID der Netzstation S1, die die besondere Funktionalität anbietet, sind weitere Informationsfelder vorgesehen. Diese können beispielsweise eine allgemeine Information über die verfügbare besondere Funktionalität F-Info, die Anzahl von Sprüngen bzw. Hops (Nr.-Hops), die Dienstegüte QoS der angebotenen besonderen Funktionalität, eine Datenrate usw. betreffen.

Mit Blick auf die Angabe der erforderlichen Sprünge aktualisiert zweckmäßiger Weise jede Relaisstation S2 den in diesem Feld Nr-Hops eingetragenen Wert durch Addition um eins. Eine von der mit der besonderen Funktionalität ausgestatteten ersten Netzstation S1 entfernte Netzstation S3, die auf die besondere Funktionalität zugreifen möchte, kann somit erkennen, ob es sich um eine direkte Verbindung oder eine indirekte Verbindung mit einem oder mehreren Sprüngen handelt. Je größer die Anzahl der Sprünge bzw. Hops ist, desto größer ist die Gefahr eines Verbindungsverlustes durch den Ausfall einer der Relaisstationen S2. Außerdem besteht bei einer größeren Anzahl erforderlicher Sprünge auch die Gefahr von Datenfehlern bei der Übertragung durch die einzelnen Relaisstationen S2. Jeder Hops bedeutet außerdem eine zusätzliche Zeitverzögerung (Delay), was beispielsweise bei Echtzeitdiensten (Real Time Services) kritisch sein kann. Unnötige Hops müssen bei bestimmten Diensten entsprechend vermieden werden, was in vorteilhafter Weise durch ein ständig anpassbares Routing berücksichtigt werden kann.

Auch um Ressourcen zu sparen, beispielsweise die Batterie von Netzstationen S2 anderer Teilnehmer, die als Relaisstation dienen, ist es vorteilhaft, die Anzahl der erforderlichen Sprünge zwischen einer anfordernden Netzstation S3 und einer als Gateway fungierenden Netzstation S1 zu berücksichtigen. Je geringer die Anzahl der Sprünge, desto geringer ist der Gesamtverbrauch von Energie der Gesamtheit aller in die Übertragung eingebundenen Netzstationen S1 - S3. In vorteilhafter Weise kann die Information über die erforderliche Anzahl von Sprüngen auch zur Auswahl verschiedener verfügbarer Routen verwendet werden, beispielsweise wenn zwischen der die besondere Funktionalität anbietenden Netzstation S1 und der die besondere Funktionalität anfordernden Netzstation S3 verschiedene Routen über verschiedene Relaisstationen möglich sind. Neben der Anzahl von erforderlichen Sprüngen kann beispielsweise auch die mögliche Dienstegüte oder eine Information über die maximal mögliche Datenrate als Auswahlkriterium bei der Verfügbarkeit verschiedener Routen herangezogen werden.

Ein weiteres Kriterium zum Feststellen, ob der Zugriff auf eine entfernte Netzstation S1 mit der besonderen Funktionalität sinnvoll ist, erhält die anfordernde dritte Netzstation S3 durch die Information der möglichen Dienstegüte QoS. Insbesondere kann auch die Information über die verfügbare Dienstegüte QoS von Relaisstationen S2 verändert werden, wenn eine Relaisstation zwar die Weitervermittlung von Daten zu einer besonderen Funktionalität ermöglicht, jedoch die erforderliche Datenrate oder Dienstegüte nicht in der ursprünglich möglichen Qualität übertragen kann. Kann die angeforderte Dienstegüte nicht angeboten werden, so kann auch eine Reduzierung auf eine zumindest erforderliche Dienstegüte vorgenommen werden.

Wenn eine Netzstation, hier die dritte Netzstation S3 auf die besondere Funktionalität einer anderen Netzstation, hier der ersten Netzstation S1 zugreifen möchte, sendet die anfordernde dritte Netzstation S3 zweckmäßiger Weise eine Anforderung (Pfeil b) zu der die Funktionalität anbietenden ersten Netzstation S1. Im vorliegenden Ausführungsfall erfolgt die Übertragung der Anforderung b wiederum über die als Relaisstation dienende zweite Netzstation S2. Mit der Anforderung wird zweckmäßiger Weise zugleich überprüft, ob die erste, die besondere Funktionalität anbietende Netzstation S1 die Funktionalität in der erforderlichen Form bereitstellen kann und ob die Route für die angeforderten Parameter ausreicht. Beispielsweise könnte ein Zugriff auf besondersartige Dienste in dem entfernten, fremden UMTS-Netz erforderlich sein, so dass zu überprüfen wäre, ob die als Gateway dienende erste Netzstation S1 mit der besonderen Funktionalität nur allgemeine Dienste oder auch den speziell angeforderten Dienst aus dem UMTS-Netz anfordern darf. Ferner kann mit dem Aussenden der Anforderung b auch die Zuverlässigkeit der Route bzw. des Pfades zu der die besondere Funktionalität anbietenden ersten Netzstation S1 überprüft werden.

Wie aus Fig. 2 ersichtlich, kann eine beispielhafte Anforderung b, die von der dritten, die besondere Funktionalität anfordernden Netzstation S3 zu der ersten, die besondere Funktionalität anbietenden Netzstation S1 gesendet wird, eine Vielzahl von Informationen enthalten. Dies können insbesondere eine Absenderangabe, z. B. eine Sender-Identifikationsnummer S3-ID, eine Zieladresse, beispielsweise die Identifikationsnummer S1-ID der die besondere Funktionalität anbietenden Netzstationen S1, eine Funktionsanforderung F-Info, eine Anforderung einer zumindest erforderlichen Dienstegüte QoS usw. sein.

Das eigentliche Routing kann vorteilhafter Weise mit beliebigen Routingverfahren durchgeführt werden. Nachdem eine Route festgelegt ist und eine Funkverbindung über Funkschnittstellen V2, V3 aufgebaut ist, können Pakete mit Nutzdaten und Signalisierungen zwischen den kommunizierenden Netzstationen S1, S3 ausgetauscht werden, was durch Pfeile c dargestellt ist. Für den Fall, dass die erste, die besondere Funktionalität anbietende Netzstation S1 einen Zugriff auf ein fremdes Netz, beispielsweise das UMTS-Netz ermöglicht, dient sie als Relaisstation und ermöglicht einen Zugriff sowie eine Datenübermittlung zum UMTS-Netz. Die Datenübertragung c kann dabei nur in einer Richtung oder aber auch in beiden Richtungen durchgeführt werden.

Beispielhafte Kopfabschnitte für Datenübertragungsblöcke sind in Fig. 2 dargestellt, wobei in den Kopfabschnitten in zweckmäßiger Weise Absender- und Ziel-Adressen S3-ID, S1-ID angegeben sind. Ferner können Angaben über die Kennung der besonderen Funktionalität, über die zu verwendende Route usw. in dem Kopfabschnitt enthalten sein.

Gemäß einer besonderen Ausführungsform wird keine feste Route vorgegeben, sondern eine Übertragung von Netzstation zu Netzstation vorgenommen. Dazu werden in den einzelnen Netzstationen S1 - S3 Tabellen angelegt, in denen eine eigene oder vermittelbare fremde Funktionsfähigkeit oder Verbindungsanforderung hinterlegt wird. Zusammen mit dieser Information wird eine spezielle Informations-Identifizierungsnummer hinterlegt. Ferner wird in der Tabelle eingetragen, von welcher anderen Netzstation eine solche Anforderung oder Information empfangen wurde und zu welcher anderen Netzstation eine solche Information oder Anforderung gesendet oder weitergeleitet wurde. Dadurch muss jede einzelne Netzstation S1 - S3 nicht mehr die Kenntnis über die gesamten Netzstationen in der Umgebung oder mögliche Routen unter Einbezug der gesamten Identifizierungsnummern aller Netzstationen auf der Route haben. In einem solchen Fall wird in die Kopfabschnittdaten dann lediglich eine Anforderungs- bzw. Informations-Identifizierungsnummer sowie die eigene Absender-Identifizierungsnummer eingetragen, um ein automatisches Routing zu ermöglichen.

Möglich ist bei einer derartigen Verfahrensweise, dass die die besondere Funktionalität benötigende Netzstation S3 nichts von der Existenz der die besondere Funktionalität bereitstellenden Netzstation S1 weiss. Die benötigende Netzstation S3 muss nur wissen, dass sie über die ihr direkt benachbarte Netzstation S2 auf die besondere Funktionalität zugreifen kann. Die dazwischen liegende Netzstation S2 weiss wiederum, dass die Funktionalität von der bereitstellenden Netzstation S1 angeboten wird und leitet die entsprechenden Signalisierungen, Informationen und Datenpakete weiter. Dadurch kommt eine Einsparung bei der Routingüberbelastung (routing overheads) des Netzes. Mit anderen Worten muss eine Netzstation gemäß dieser Ausführungsform nur wissen, dass die Funktionalität irgendwo im Netz angeboten wird und über welche benachbarte Netzstationen bzw. über welchen nächsten Sprung bzw. Hop sie die Funktionalität vermittelt bekommt.

In zweckmäßiger Weise werden sowohl die Signalisierung einer besonderen Funktionalität als auch die Anforderungen einer solchen besonderen Funktionalität regelmäßig wiederholt ausgesendet, um fortlaufend über besondere Funktionalitäten zu informieren bzw. fortlaufend ein optimales Routing und Zugreifen auf besondere Funktionalitäten zu ermöglichen.

## Patentansprüche

1. Verfahren zum Identifizieren und/oder Nutzen von Netzstationen (S1) mit besonderer Funktionalität (F) in einem Ad-hoc-Netz mit zumindest zwei Netzstationen (S1 - S3), von denen zumindest eine Netzstation (S1) die besondere Funktionalität (F) anderen der Netzstationen (S2, S3) anbietet, wobei - die Fähigkeit zum Ausführen einer besonderen Funktionalität (F) den anderen Netzstationen (S2) und/oder eine entsprechende Weitervermittlungsmöglichkeit zu einer Netzstation (S1) mit einer solchen Funktionalität den anderen Netzstationen (S3) mittels einer Signalisierung (a) mitgeteilt wird.

2. Verfahren nach Anspruch 1, bei dem
die Signalisierung (a) über einen Nachrichten- und/oder einen Kommunikationskanal durchgeführt wird.

3. Verfahren nach Anspruch 1 oder 2, bei dem
mit der Signalisierung (a) Zusatzinformationen, insbesondere über die angebotene besondere Funktionalität (F), Dienstegüte (QoS) und/oder Anzahl erforderlicher Sprünge (Nr.-Hops) übermittelt wird.

4. Verfahren, nach einem vorstehenden Anspruch, bei dem
die besondere Funktionalität in der Ermöglichung eines Zugriffs auf ein fremdes Kommunikationsnetz (UMTS) und/oder einen Datenspeicher besteht.

5. Verfahren nach einem vorstehenden Anspruch, bei dem
eine Anforderung (b) der besonderen Funktionalität durch eine anfordernde Netzstation (S3) abhängig von möglichen Dienstegüten (QoS), Anzahl erforderlicher Sprünge (Nr.-Hops) und/oder speziellen besonderen Funktionalitäten (F) durchgeführt wird.

6. Ad-hoc-Netzstation (S1) mit einer Sende- und Empfangseinrichtung (AL) zum Aufbauen einer Funkverbindung (V2) zu zumindest einer anderen Netzstation (S2),
**dadurch gekennzeichnet, dass**
die Ad-hoc-Netzstation (S1) ein Funktionsmodul (F) zum Bereitstellen einer besonderen Funktionalität aufweist, wobei diese Funktionalität den anderen Netzstationen (S2, S3) angeboten wird.

7. Ad-hoc-Netzstation (S1) nach Anspruch 6, bei der
das Funktionsmodul (F) als besondere Funktionalität einen Zugang zu einem anderen Kommunikationssystem, insbesondere UMTS-Netz aufweist.

8. Ad-hoc-Netzstation (S1) nach Anspruch 6 oder 7 , mit einer Signalisierungseinrichtung zum Signalisieren der besonderen Funktionalität an andere Netzstationen (S2, S3).
